# EUROPÄISCHE PATENTSCHRIFT

(11) **EP 1 923 660 B1**
(45) Veröffentlichungstag und Bekanntmachung des Hinweises auf die Patenterteilung: **26.02.2014**
(21) Anmeldenummer: 07115152.6
(22) Anmeldetag: 29.08.2007
(51) Int. Cl.: G01B 3/06

(54) **Gliedermaßstab aus Holz sowie Verfahren zu dessen Herstellung**
Wooden folding ruler and method for its manufacture
Mètre pliant en bois et son procédé de fabrication

(30) Priorität: 14.11.2006 DE 102006053838
(43) Veröffentlichungstag der Anmeldung: 21.05.2008
(73) Patentinhaber: Adga Adolf Gampper GmbH, 74535 Mainhardt (DE)
(72) Erfinder: Gampper, Gerald, 74535, Mainhardt (DE)
(74) Vertreter: Wolf, Eckhard

(56) Entgegenhaltungen:
- DE-U1- 8 910 334

## Beschreibung

Die Erfindung betrifft einen Gliedermaßstab mit mehreren als langgestreckte Flachstäbe aus Holz ausgebildeten, mit fortlaufenden Skalenmarkierungen versehenen Maßstabsgliedern, die paarweise an Rastgelenken miteinander verbunden sind, wobei die beiden Endglieder durch je eine quer zu ihrer Längserstreckung verlaufende, ein Endmaß definierende stirnseitige Endfläche mit erhöhter Verschleiß- und Stoßfestigkeit begrenzt sind. Die Erfindung bezieht sich außerdem auf ein Verfahren zur Herstellung eines solchen Gliedermaßstabs.

Gliedermaßstäbe sind in ihrem ausgeklappten, gestreckten Zustand verkörperte Längenmaße, deren Endmaß durch die beiden voneinander abgewandten stirnseitigen Endflächen der Endglieder gebildet ist. Die Endflächen müssen ebenso wie die als Strichmarken ausgebildeten Skalenmarkierungen senkrecht zur Längserstreckung des ausgeklappten Gliedermaßstabes ausgerichtet sein. Um eine ausreichende Maßgenauigkeit auch bei längerem Gebrauch zu gewährleisten, müssen die die Endmaße bildenden Endflächen bei Gliedermaßstäben aus Holz aus einem verschleiß- oder stoßfesten Beschlag bestehen, der mit dem jeweiligen Endglied des Gliedermaßstabs zweckmäßig verbunden ist. Bei bekannten Gliedermaßstäben, die diesen Vorschriften entsprechen, ist auf das stirnseitige Ende der Endglieder ein als Metallbiegeteil ausgebildeter Beschlag mit ebener Endfläche im Maßstabsholz verankert. Um die Maßgenauigkeit einzuhalten, muß daher das Endglied mit einem gewissen Untermaß, das der Materialwandstärke des Beschlags entspricht, abgelängt werden. Die Materialwandstärke beträgt ca. 0,3 mm, die beim Ablängen der Endglieder relativ zu den maßbestimmenden Gelenkbohrungen berücksichtigt werden müssen. Das Material für den Endbeschlag wird üblicherweise von einem Band ausgestanzt. Gleichzeitig werden beim Ausstanzen Zacken gebildet, mit denen der Beschlag am Rand des Endglieds in das Maßstabsholz eingedrückt wird. Durch die eindringenden Zacken wird das Maßstabsholz an einer für die Maßgenauigkeit wichtigen Stelle verletzt. Auch beim Anbringen des Beschlags treten Probleme auf, die daher rühren, dass zum Eindrücken der Zacken ein erhöhter Druck erforderlich ist, der zu einer Verformung des Beschlags und des Maßstabsholzes führt. Zugleich bedarf es im Bereich der ebenen Stirnfläche einer Gegenhaltekraft, um sicherzustellen, dass bei der Entlastung des Beschlags im Zuge der Herstellung eine definierte Rückverformung eintritt. Weiter wird dort als nachteilig angesehen, dass das Maßstabsholz im Bereich seiner Stirnfläche und an den Eindringstellen der Zacken porös ist, so dass es in entsprechender Umgebung zu einer erhöhten Feuchtigkeitsaufnahme kommen kann.

Ausgehend hiervon liegt der Erfindung die Aufgabe zugrunde, einen Gliedermaßstab sowie ein Verfahren zu dessen Herstellung zu entwickeln, womit ein Beschlag auf den Endgliedern entbehrlich und dennoch eine normgerechte Verschleiß- und Stoßfestigkeit im Endbereich erzielt wird.

Zur Lösung dieser Aufgabe werden die in den Ansprüchen 1 und 3 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, dass die Endglieder an ihrem einen Ende durch ein thermisches Trennverfahren exakt auf Endmaß abgelängt und zugleich an der Trennstelle thermisch porenversiegelt werden. Die Porenversiegelung führt zu einer Verdichtung des Holzes im Bereich der das Endmaß bestimmenden Endfläche, die mit einer Erhöhung der Verschleiß- und Stoßfestigkeit einhergeht. Die Anbringung eines zusätzlichen Metallbeschlages ist daher entbehrlich.

Gemäß einer bevorzugten Ausgestaltung der Erfindung werden die Endglieder mittels eines über die Trennstelle bewegten Laserstrahls exakt auf Endmaß abgelängt und zugleich thermisch porenversiegelt. Unter der Einwirkung des Laserstrahls ergibt sich neben dem Trennschnitt eine kurzzeitige Temperaturerhöhung, die zu einer porenfrei verdichteten und glatten Oberfläche führt.

Mit dem erfindungsgemäßen Herstellungsverfahren werden somit Gliedermaßstäbe hergestellt, deren Endglieder an ihren exakt auf Nennmaß gekürzten, freiliegenden, aus Holz bestehenden Endflächen thermisch porenversiegelt sind. Die das Endmaß bildenden Endflächen sind dabei bevorzugt als unter der Schneidwirkung eines Laserstrahls erzeugte Trennflächen ausgebildet.

Im Folgenden wird die Erfindung anhand eines in der Zeichnung in schematischer Weise dargestellten Ausführungsbeispiels näher erläutert. Es zeigen
Fig. 1 eine Seitenansicht eines Holzgliedermaßstabs;
Fig. 2 eine Draufsicht auf eines der Endglieder des Gliedermaßstabs nach Fig. 1;
Fig. 3 einen Schnitt durch das stirnseitige Ende des Endglieds in vergrößerter ausschnittsweiser Darstellung.

Der in der Zeichnung dargestellte Gliedermaßstab besteht aus einer größeren Anzahl, beispielsweise aus zehn in der Nähe ihrer Gliedenden 10, 10' im Abstand von den stirnseitigen Gliedkanten 11 mittels Nietbolzen 12 paarweise gelenkig miteinander verbundenen Holzgliedern 14, 16. Die Nietbolzen 12 greifen durch miteinander fluchtende Gelenkbohrungen 18 in den Holzgliedern 14, 16 hindurch und stützen sich mit ihren Köpfen an den Breitseitenflächen der Holzglieder ab und drücken diese an ihren einander zugewandten Breitseitenflächen gegeneinander. Ein im Bereich der miteinander verbundenen Gliedenden angeordneter Rastmechanismus 38 sorgt dafür, dass die Maßstabsglieder 14, 16 in ihren Parallellagen miteinander verrasten und dass in den Zwischenlagen eine definierte Reibung oder Bremskraft zwischen den Maßstabsgliedern entsteht. Die Maßstabsglieder sind mit fortlaufenden, als Strichmarken ausgebildeten Skalenmarkierungen 20 versehen. Das Endmaß 24 des Gliedermaßstabs wird durch die stirnseitigen Endflächen 22 der beiden Endglieder 16 definiert, die quer zur Längserstreckung des Endgliedes 16 verlaufen.

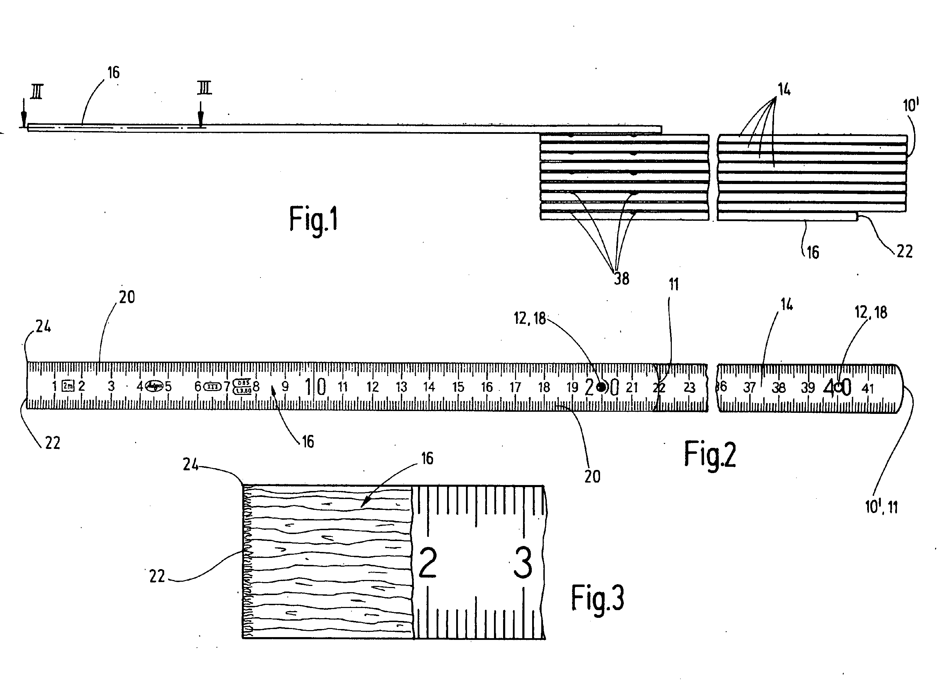

Eine Besonderheit der Erfindung besteht darin, dass die Endflächen 22 der aus Holz bestehenden Endglieder 16 freiliegen und exakt auf Endmaß 24 gekürzt sind. Außerdem sind die Endflächen 22 thermisch versiegelt und verdichtet (vgl. Fig. 3) und weisen dadurch eine erhöhte Verschleiß- und Stoßfestigkeit auf. Eine bevorzugte Ausgestaltung der Erfindung sieht vor, dass die das Endmaß 24 bildende Endfläche 22 der Endglieder 16 als unter der Einwirkung eines Laserstrahls erzeugte Trennfläche ausgebildet ist. Mit dieser Maßnahme wird einer bei Holzmaßstäben vorgeschriebenen Eigenschaft Rechnung getragen, dass die das Endmaß definierenden Begrenzungsflächen eine gegenüber dem Maßstabsholz erhöhte Verschleiß- und Stoßfestigkeit aufweisen.

Zusammenfassend ist folgendes festzuhalten: Die Erfindung bezieht sich auf einen Gliedermaßstab aus Holz. Der Gliedermaßstab weist mehrere als langgestreckte Flachstücke ausgebildete, mit Skalenmarkierungen 20 versehene Maßstabsglieder 14, 16 auf, die paarweise an Rastgelenken 12, 18, 38 miteinander verbunden sind. Die beiden Endglieder 16 sind durch je eine quer zu ihrer Längserstreckung verlaufende, ein Endmaß 24 definierende stirnseitige Endfläche 22 mit erhöhter Verschleiß- und Stoßfestigkeit begrenzt. Erfindungsgemäß sind die Endglieder 16 an ihrem einen Ende mittels eines über die Trennstelle bewegten Laserstrahls auf Endmaß 24 abgelängt und thermisch porenversiegelt.

## Patentansprüche

1. Gliedermaßstab mit mehreren als langgestreckte Flachstäbe aus Holz ausgebildeten, mit fortlaufenden Skalenmarkierungen (20) versehenen Maßstabsgliedern (14, 16), die paarweise an Rastgelenken (12, 38) miteinander verbunden sind, wobei die beiden Endglieder (16) durch je eine quer zu ihrer Längserstreckung verlaufende, ein Endmaß (24) definierende stirnseitige Endfläche (22) mit erhöhter Verschleiß- und Stoßfestigkeit begrenzt sind, **dadurch gekennzeichnet, dass** die Endglieder (16) an ihren exakt auf Endmaß (24) gekürzten, freiliegenden, aus Holz bestehenden Endflächen (22) thermisch porenversiegelt sind.

2. Gliedermaßstab nach Anspruch 1, **dadurch gekennzeichnet, dass** die das Endmaß (24) bildenden Endflächen (22) als unter der Einwirkung eines Laserstrahls erzeugte Trennflächen ausgebildet sind.

3. Verfahren zur Herstellung eines Gliedermaßstabs, bei welchem mehrere langgestreckte Flachstäbe (14, 16) abgelängt, mit fortlaufenden Skalenmarkierungen (20) bedruckt, mit Gelenkbohrungen (18) versehen und über die Gelenkbohrungen (18) paarweise gelenkig miteinander verbunden werden, wobei im Zuge der Fertigung die beiden Endglieder (16) an ihren freien stirnseitigen Enden unter gleichzeitiger Erhöhung der Verschleiß- und Stoßfestigkeit auf Endmaß (24) gebracht werden, **dadurch gekennzeichnet, dass** die Endglieder (16) an ihrem einen Ende durch ein thermisches Trennverfahren exakt auf Endmaß (24) abgelängt und zugleich an der Trennstelle thermisch porenversiegelt werden.

4. Verfahren nach Anspruch 3, **dadurch gekennzeichnet, dass** die Endglieder (16) mittels eines über die Trennstelle bewegten Laserstrahls auf Endmaß (24) abgelängt und thermisch porenversiegelt werden.

## Claims

1. Folding ruler comprising multiple ruler elements (14, 16) formed as elongated flat wooden rods and provided with continuous scale markings (20), which are connected to each other in pairs at latching hinges (12, 38), the two end elements (16) each being delimited by end faces (22) of increased wear and shock resistance which extend transversely with respect to the longitudinal extent of the said elements and define an end dimension, **characterized in that** the end elements (16) have their pores sealed thermally at their exposed end faces (22) consisting of wood, which are shortened exactly to an end dimension (24).

2. Folding ruler according to Claim 1, **characterized in that** the end faces (22) forming the end dimension (24) are formed as separation faces produced under the action of a laser beam.

3. Method for manufacturing a folding ruler, in which multiple elongated flat rods (14, 16) are cut to length, printed with continuous scale markings (20), provided with hinge holes (18) and connected to each other in pairs in an articulated manner via the hinge holes (18), in the course of the fabrication the two end elements (16) being brought to an end dimension (24) at their free ends whilst simultaneously increasing the wear and shock resistance, **characterized in that** the end elements (16) are cut to length exactly to an end dimension (24) at their one end by means of a thermal separation method and, at the same time, their pores are sealed thermally at the separation point.

4. Method according to Claim 3, **characterized in that** the end elements (16) are cut to length to an end dimension (24) by means of a laser beam moved over the separation point and their pores are sealed thermally.

## Revendications

1. Mètre pliant comprenant plusieurs segments de mètre pliant (14, 16) réalisés sous forme de règles plates longilignes en bois, pourvus de marquages gradués continus (20), lesquels segments de mètre pliant sont connectés les uns aux autres par paires au niveau d'articulations encliquetables (12, 38), les deux segments d'extrémité (16) étant limités par une surface d'extrémité frontale respective (22) définissant une longueur finale (24) et s'étendant transversalement à leur étendue longitudinale, ayant une résistance accrue à l'usure et aux chocs, **caractérisé en ce que** les segments d'extrémité (16) au niveau de leurs surfaces d'extrémité (22) en bois libres, raccourcies exactement à la longueur finale (24), sont soumis à un traitement de scellage thermique des pores.

2. Mètre pliant selon la revendication 1, **caractérisé en ce que** les surfaces d'extrémité (22) formant la longueur finale (24) sont réalisées sous forme de surfaces de coupe produites par l'action d'un faisceau laser.

3. Procédé de fabrication d'un mètre pliant dans lequel plusieurs règles plates longilignes (14, 16) sont dé coupées à la longueur requise, sont imprimées avec des marquages gradués continus (20), sont pourvues de perçages d'articulation (18) et sont connectées les unes aux autres de manière articulée par paires par le biais des perçages d'articulation (18), les deux segments d'extrémité (16), au cours de la fabrication, étant amenés à la longueur finale (24) au niveau de leurs extrémités frontales libres en augmentant simultanément la résistance à l'usure et aux chocs, **caractérisé en ce que** les segments d'extrémité (16), à l'une de leurs extrémités, sont découpés exactement à la longueur finale (24) par un procédé de découpe thermique et sont en même temps soumis à un traitement de scellage thermique des pores au niveau de la zone de découpe.

4. Procédé selon la revendication 3, **caractérisé en ce que** les segments d'extrémité (16) sont découpés à la longueur finale (24) au moyen d'un faisceau laser déplacé sur la zone de découpe et sont soumis à un traitement de scellage thermique des pores.
